# EUROPEAN PATENT APPLICATION

(11) **EP 1 316 908 A1**
(43) Date of publication of application: **04.06.2003**
(21) Application number: 02258346.2
(22) Date of filing: 03.12.2002
(51) Int. Cl.: G06F 17/60

(54) **Integrated internet portal and deployed product microserver management system**

(30) Priority: 03.12.2001 US 337926 P; 22.05.2002 US 155593
(71) Applicant: UNITED TECHNOLOGIES CORPORATION, Hartford, CT 06101 (US)
(72) Inventor: Loda, David C., Bolton, Connecticut 06043 (US); Macchia, Enzo, Kleinburg, Ontario L0J 1C0 (CA); Stickling, Bjorn, Mississauga, Ontario L5V 1R3 (CA); Qadri, Sam, Brossard, Quebec J4Y 2L2 (CA)
(74) Representative: Samuels, Adrian James

(57) **Abstract**

The present invention relates to an integrated system for monitoring a deployed product on a movable platform (14), gathering data about the deployed product, and disseminating the data about the deployed product. The system includes a server (12) located on the movable platform (14) capable of communication with the server from a remote location. The server communicates with a source of data about the deployed product. The system further includes a portal (24) onto which data gathered by the server (12) may be downloaded and with which one can upload information to the server (12).

## Description

The present invention relates to an integrated Internet portal and deployed product microserver management system.

There are three general types of maintenance for products. They are on-demand maintenance (usually when a product breaks), scheduled maintenance (based upon the factory's best estimate when something will wear out with normal usage), and condition based maintenance (maintenance that occurs when maximum usage is obtained from a part but just prior to part failure). On demand maintenance is self-explanatory - a component fails and has to be repaired or replaced. This normally occurs as an end result of its operators not understanding its component life or the conditions of its use, and the highest costs - both physical and lost time - are associated with it. Unfortunately, it is also among the most common maintenance. Scheduled maintenance is less costly but can be very wasteful. Depending upon the product's usage, one may be replacing parts that still have a significantly useful life. This is also where corners tend to be cut by the customer when budgets become tight, and often lead back to the first type of maintenance described above, sometimes with catastrophic results. The third form of maintenance is condition-based maintenance and is the holy grail of maintenance in many industries. If a manufacturer or service organization can accurately ascertain the maximum life of a component based upon actual wear, tear, and usage, it would then allow for the optimized, just-in-time servicing and replacement of that component, thereby allowing for the user to gain maximum product life and to schedule the replacement at a non-critical time. As a result, a manufacturer utilizing condition based maintenance could better plan its spares production and save millions of dollars in unnecessary production, warehousing and inventory taxes.

There is however a catch to condition-based maintenance - there must exist a closed feedback loop system of information related to each product's use. Without first-hand knowledge of how a product is being used after it is sold and deployed to the field, a manufacturer or service provider has no real way of knowing when components will wear out based on usage, and must therefore default back to using one or both of the first two types of maintenance described above. Operators are in the best position to gather this first hand knowledge, but most are too busy operating and making money with the product and have little time, money and/or inclination to attempt to capture this information to provide feedback to the manufacturer or service provider even though it is in their own best interest to do so.

In an attempt to gather useful information from the field, a variety of methods have been used to try and solve the collection of product usage data. On the low end, customer surveys, feedback forms, and interaction with field support personnel have been the primary means of obtaining a rudimentary form of feedback. For complex and expensive products, such as aircraft engines, the most common form is that of paper-based operational logs. This is a highly manual and painful method of collecting operational information. Over the years, computer collection systems have tried to make this process easier, but they still require a great deal of manual intervention.

More recent advances have involved the incorporation of automated data recording devices onto products, such as engine data units (or EDUs), which are used on turbine engines, which communicate with an engine's electronic control systems and record operational data using a variety of sensors. However, it is still extremely difficult and costly to gather information from these data collection devices, as it must be done manually by mechanics in the field using specialized equipment or laptop computers with cables, with which they usually have little familiarity or interest. The only other option is to wait until the product is returned to a shop environment for a major overhaul and repair, at which point the data from a preventative maintenance perspective is moot, and useful only from a post analysis or fleet average perspective.

A number of industries normally attempt to gather product usage intelligence through manual inspections and, more recently, laptop computer downloads performed concurrently with scheduled or on-demand maintenance service calls. This is normally accomplished by one of two methods - sending the service person to the product, bringing the product to a service center, or both. Examples of the former include products with fixed installations, such as elevators, HVAC systems, nuclear power plants, and large home appliances. Examples of the latter include automobiles, small home appliances, home electronics equipment, lawnmowers, or anything small enough to be easily carried or shipped. Both methods are inefficient and result in significant down time.

With advances in low cost computing and the advent of wireless technologies and the Internet, companies are now looking at how they can collect product usage intelligence in an automated and remote fashion. Many of the systems which have evolved such as VHF frequency, cell phone, or wireless land-based data download methods, tend to be very expensive as have attempts at using emerging technologies to accomplish essentially the same thing - remote data file compression and download to a central location using a public or private network/Internet where the information can then be manually uncompressed and analyzed. As a result, the high cost associated restricts the application of wireless remote monitoring to high value products, such as jet aircraft and helicopters. Thus, there remains a need for a low cost, wireless system which accurately ascertains the condition of a deployed product based upon actual wear, tear, and usage and present information about that condition to a user, a manufacturer, an operator, or any other interested party, that is deployable with the product and that provides greater flexibility interaction than simple data downloading.

Accordingly, it is an object of the present invention to provide an integrated system for monitoring the condition of a deployed product, gathering data about the deployed product, and disseminating the data to interested parties.

It is a further object of the present invention to provide an integrated system as above which allows remote diagnostic operations by a manufacturer of, service provider for, or operator of a deployed product.

It is still a further object of the present invention to provide an integrated system as above which has particular utility in the gathering of information about a deployed product on a movable platform, such as a vehicle.

It is a further object of the present invention to provide an integrated system as above which allows for remote, two way communications with a mobile product after it has been sold and is in use in the field.

The foregoing objects may be attained by preferred embodiments of the integrated system of the present invention.

In accordance with the present invention, an integrated system for monitoring a deployed product on a movable platform, gathering data about the deployed product, and disseminating the data about the deployed product broadly comprises a server located on the movable platform, said server communicating with a source of data about said deployed product, and means for enabling communication with the server from a remote location. The server can be stand alone or integrated with another product component.

The system of the present invention has broad applicability and may be used to monitor, gather data about, and distribute data about a deployed product, system, or component on an aircraft, an automobile, a marine vessel, a spacecraft, or any other movable platform.

Other details of the integrated system of a preferred embodiment of the present invention, as well as other objects and advantages attendant thereto, are set forth in the following detailed description and the accompanying drawing, given by way of example only wherein:

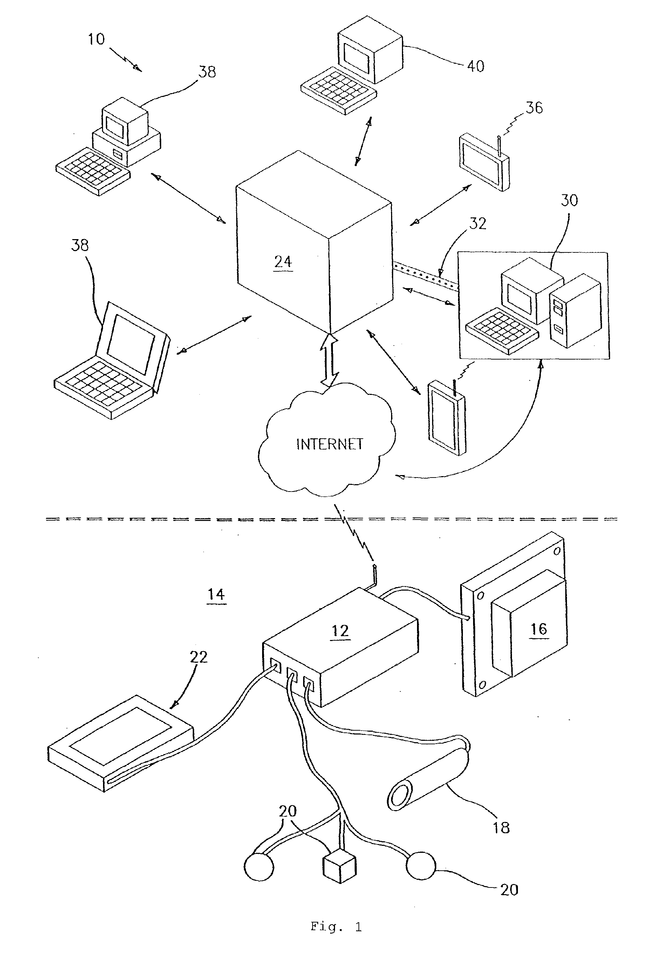

- FIG. 1: The figure is a schematic representation of an integrated system for monitoring, gathering data about, and disseminating data about a deployed product in accordance with the preferred embodiment.

Referring now to Figure 1, a system 10 is presented which is capable of monitoring a deployed product, gathering data about the deployed product, and disseminating the data to interested parties. It is also capable of monitoring and restricting interested parties' access to its data, and can accept data for storage or integration within the product itself, such as firmware revision updates. As used herein, the term "deployed product" has broad applicability and refers to any product, component, or system on a vehicle. For example, the deployed product may be a propulsion system on a vehicle, a compartment of a vehicle, or a braking system for a vehicle.

The system 10 includes a server 12 located on a movable platform 14. The movable platform 14 may be a boat, an airplane, a spacecraft, an automobile, a truck, or any other entity that is movable. The server 12 may monitor the condition of and/or gather data about the deployed product in a number of ways. For example, the server 12 may be connected to or integrated with a vehicle data storage unit 16 which contains data about the deployed product. The server 12 may also be connected to a video camera 18, such as video web camera, to provide pictures, in real-time or on a delayed basis, of the deployed product. Still further, the server 12 may be connected to a number of sensors 20, such as a vibration sensor or a temperature sensor, which provide additional or environmental information about the condition of the deployed product.

The server 12 may be programmed in any suitable language known in the art to gather the data about the deployed product and present the data to interested parties in a desired format. For example, the server 12 may be used to host a web page which provides information about one or more deployed products on the movable platform. The web page may have a menu which allows an interested party to gain access to gathered data about a particular deployed product. The data about the deployed product(s) may be organized on the server 12 and presented in any desirable format or manner. The server 12 may also be programmed to allow an interested party to carry out diagnostic operations on the deployed product(s) and/or to upgrade software associated with the deployed product(s).

While it is contemplated that the system 10 of the present invention would primarily be used to allow interested parties in remote locations to obtain information about a deployed product, there will be times when a mechanic or an engineer may want to interact with the server 12 while he or she is onboard the movable platform 14. To this end, the server 12 may be provided with a local USB or other communications port 22 for direct hook-up. A mechanic or engineer could then gain access to the server 12 by hooking up a promtop, laptop computer or another device such as a video borescope or a bar code reader to the communications port 22. Other examples of communication ports through which access may be gained to server 12 include wireless peer-to-peer communication links. The mechanic or engineer could then conduct a desired diagnostic operation or even fix a problem with the deployed product.

The server 12 may comprise any suitable computer or processing unit known in the art. In a preferred embodiment of the present invention, the server 12 is a hand-held sized microserver using a Linux-based operating system. Further, the server 12 may be provided with its own web address, a firewall, and security protocols known only to selected individuals, such as the manufacturer of the deployed product.

In accordance with the present invention, the server 12 is capable of being accessed by interested parties via a portal 24 and the Internet or world wide web. To this end, the server 12 may have a communications device, such as a modem, built within it to allow communication between the server 12 and the portal 24. The communication device may allow for radio frequency communications such as cellular communication, satellite communication, an/or wireless communication between the server 12 and the portal 24. In addition, communications between the server 12 and the portal 24 may be achieved by optical means such as an infrared link.

The portal 24 is hosted by an external server which may be any suitable server known in the art. The server hosting the portal 24 also has appropriate communication means associated it to allow it to gain access to and be accessed by the server 12.

Data gathered by and stored on the server 12 may be downloaded to the portal 24 as desired. For example, the server 12 may be programmed to periodically download data to the server hosting the portal 24 or to download data on specific events such as when an aircraft lands or when a truck or automobile reaches a particular destination. The server 12 may also download data to the portal 24 upon the activation of a switch by an operator onboard the moving platform. Alternatively, the portal server may upload data to the microserver, such as product firmware revisions or technical manuals for access by interested parties.

The portal 24 may be provided with a number of software tools called gadgets to automatically analyze, organize, and sort the data which has been received from the server 12. The data is preferably sorted so that different communities gain access to different portions of the data. For example, actual and potential customers of a vendor of a deployed product may form one community and have access to certain data, while support engineers and product designers may form a second community and have access to another form of the data. As can be seen from the foregoing discussion, the portal 24 offers great flexibility as to how and to whom the data is disseminated. Still further, the portal 24 provides virtual shared spaces which allow for the common space posting and access of information about a deployed product in a shared awareness between customers, support engineers, field operatives, and even product designers. The portal 24 may also be designed to provide chat rooms, bulletin boards, and on-line meeting capabilities where interested parties can communicate with each other.

One of the advantages to using the portal 24 is that its functionality can be carried out in a secure, user friendly, web-based environment. Members of a particular community can log in by presenting an identification and/or a password and gain access to current information about a deployed product. Another advantage to using the portal 24 is that it can be used to upload data, information, instructions, software, diagnostic programs, etc. to the server 12. Thus, an engineer can perform diagnostic tests on a deployed product from a remote location using the Internet.

Access to the portal 24 may be gained in a number of different ways by a variety of devices as described below. For example, an interested party in can communicate with the portal 24 through his/her personal computer 38 and the web browser on the computer 38. The computer 38 may be a PC workstation at the user's office or a laptop or PC at the user's home. Even a computer 40 in an Internet café may be used to gain access to the portal 24. A wireless PC tablet 36 on the shop floor of a manufacturer of the deployed product may also be used to communicate with the portal 24. The portal 24 may also be in communication with the internal network 30 of the manufacturer of or a vendor of the deployed product. When the portal 24 is to be in communication with the network 30, a secure data pipe 32 may be used for crawlers for automated data exchange. If desired, the portal 24 may communicate with the internal network 30 via a wireless PDA.

The system 10 may also be configured to allow the internal network 30 to communicate directly with the server 12 via the Internet by dialing up the web address for the server 12. When in such a configuration, a firewall may be provided between the internal network 30 and the server 12.

As can be seen from the foregoing discussion, the system 10 of the present invention has broad applicability and can be used for a wide variety of purposes. For example, as previously mentioned, the system 10 can be used by an engineer working for a manufacturer of the deployed product to gain access to the server 12 and to then carry out a diagnostic operation or a fix on a particular deployed product. All of this can be carried out while the movable platform 14 is in motion and in a location remote from the engineer, thus avoiding having to return a deployed product to a manufacturer for diagnosis and repair.

The system 10 may also be used to check the status of a deployed product. For example, an operator of a fleet of airplanes having a network 30 may contact the server 12 on a particular airplane, either directly or through the portal 24, and learn the location of and the status of that airplane. Alternatively, a manufacturer of a jet engine may access the server 12 through its network, again either directly or through the portal 24, to ascertain the condition of a particular jet engine or a particular component on the jet engine to determine when that engine or component may require servicing, and to collect data in determining product and fleet averages for improved product design and support. This can save the manufacturer unnecessary warranty, maintenance wear, and spare parts production costs.

One advantage to the system of the present invention is that it may be easily and cheaply installed into a vehicle. For example, the server 12 may be installed in the cabin of an aircraft, by using existing test ports already wired into the engine/airframe.

It is apparent that there has been provided in accordance with the present an integrated Internet portal and deployed product microserver management system which fully satisfies the objects, means, and advantages set forth previously herein. While the present invention has been described in the context of specific embodiments thereof, other alternatives, modifications, and variations will become apparent to those skilled in the art having read the foregoing description. Accordingly, it is intended to embrace those alternatives, modifications, and variations as fall within the broad scope of the appended claims.

## Claims

1. An integrated system (10) comprising:
a deployed product;
a server (12) integrated with a movable platform (14) said server (12) communicating with at least one source of data (16, 18 or 20) about said deployed product; and
means for enabling two-way communications with said server (12) from a remote location.

2. An integrated system according to claim 1, wherein said server (12) hosts a web page and said web page has a corresponding Internet web address.

3. An integrated system according to any preceding claim, wherein said at least one data source comprises means for taking pictures (18) of said deployed product located on said movable platform (14) and said server (12) communicating with said picture taking means (18).

4. An integrated system according to any preceding claim, wherein said at least one data source comprises sensor (20) means for sensing at least one parameter of said deployed product and said server (12) communicating with said sensor means.

5. An integrated system according to any preceding claim, wherein said at least one data source comprises a vehicle data storage unit (16) and said server (12) communicating with said vehicle data storage unit (16).

6. An integrated system (10) according to any preceding claim, further comprising a local USB port (22) enabling access to said server and wherein said local USB port (22) is connected to said server.

7. An integrated system according to any preceding claim, wherein said movable platform (14) comprises a vehicle or an aircraft and said deployed product comprises a vehicle or aircraft system having at least one component.

8. An integrated system according to claim 7, wherein said aircraft system comprises an engine on said aircraft or a compartment on said aircraft.

9. An integrated system according to any preceding claim,
wherein said server (12) comprises a miniserver or a hand held server.

10. An integrated system according to any preceding claim, wherein said communication enabling means is part of said server.

11. An integrated system according to any preceding claim, wherein said communication enabling means comprises means for enabling wireless communication with said server (12), radio frequency communication means, or optical communication means.

12. An integrated system according to any preceding claim, further comprising a portal (24) for communicating with said server (12).

13. An integrated system according to claim 12, wherein said portal (24) is hosted by an external server in a location remote from a location of said movable platform (14).

14. An integrated system according to claim 12 or 13, wherein said portal (24) is used to provide remote diagnostic operations to said deployed product.

15. An integrated system according to any of claims 12 to 14, further comprising a wireless PC tablet (36) in wireless communication with said portal (24) or said server (12).

16. An integrated system comprising:
a server (12) onboard an aircraft, said aircraft having at least one engine;
a web page hosted by said server (12), said web page communicating with a vehicle data storage unit (16) having data about said at least one engine; and
means for accessing said web page.

17. An integrated system according to claim 16, wherein said web page has a menu for invoking a particular function;
wherein said server (12) comprises a hand held miniserver;
wherein said web page accessing means comprises a portal (24) located remotely from said server (12) and means for enabling communication between said portal (24) and server (12) via the Internet;
wherein said portal (24) has software tools for analyzing and organizing the data received from the server (12); and
wherein said software tools includes a software tool which organizes said data into communities with a first community having access to a first set of data and a second community having access to a second set of data different from said first set of data.

18. An integrated system according to claim 17, further comprising said portal (24) having means for uploading at least one of information and instructions to said server (12), and wherein said instructions are instructions for performing a diagnostic operation on said engine.

19. An integrated system according to any of claims 16 to 18, further comprising a network internal to a manufacturer of said engine and said accessing means comprises means for direct communication between said network and said server via the Internet.
